**Europäisches Patentamt**

**European Patent Office**

**Office européen des brevets**

(19)

(11) Veröffentlichungsnummer: **0 016 471**
**B1**

(12) # EUROPÄISCHE PATENTSCHRIFT

(45) Veröffentlichungstag der Patentschrift:
04.05.83

(51) Int. Cl.³: **B 60 B 39/08,** B 61 C 15/10,
E 01 C 19/20

(21) Anmeldenummer: **80101509.0**

(22) Anmeldetag: **21.03.80**

(54) Dosiereinrichtung für eine Sandungsanlage eines Fahrzeuges.

(30) Priorität: **21.03.79 DE 2911075**

(73) Patentinhaber: **Knorr-Bremse GmbH, Moosacher Strasse 80, D-8000 München 40 (DE)**

(43) Veröffentlichungstag der Anmeldung:
**01.10.80 Patentblatt 80/20**

(72) Erfinder: **Hefter, Erik, Dr., Richard-Strauss-Strasse 2a, D-8031 Eichenau (DE)**
Erfinder: **Baumgarth, Rolf, Dr., Carl-Diem-Strasse 6, D-8056 Neufahrn (DE)**

(45) Bekanntmachung des Hinweises auf die Patenterteilung:
**04.05.83 Patentblatt 83/18**

(84) Benannte Vertragsstaaten:
**AT BE CH DE FR GB IT NL SE**

(56) Entgegenhaltungen:
**DE-A-2 656 646**
**DE-A-2 725 639**

## Dosiereinrichtung für eine Sandungsanlage eines Fahrzeuges

Die Erfindung betrifft eine Dosiereinrichtung für eine Sandungsanlage eines Fahrzeuges, insbesondere Schienenfahrzeuges, mit einem nach außen weitgehend dicht durch den Boden des Behälters (1) bis unter eine Glocke (9) im Behälter ragenden und unmittelbar vor wenigstens einem Fahrzeugrad endenden Sandrohr (8, 11), einer an den luftdurchlässig ausgebildeten Boden (4) des Behälters angeschlossen und in Verbindung mit einer Druckluftquelle stehenden Versorgungsluftleitung (13) und einer an das Sandrohr mit Abstand von der Glocke angeschlossenen Abluftleitung (5), deren offenes Ende (6) in vom Sand im wesentlichen freigehaltenen oberen Teil des Behälters liegt, einer in die Versorgungsleitung (13) eingeschalteten pneumatischen Steuervorrichtung zur Überwachung der an den Behälter abgegebenen Luft, die sich im Behälter in zwei Teilströme aufteilt, von denen der eine Teilstrom (Dosierluftstrom) zum dosierten Austragen von Sand auf dem kürzesten Wege über die Glocke (9) in das Sandrohr (8, 11) eintritt und der andere Teilstrom (Abluftstrom) zum Trockenen bzw. Auflockern des Sandes entgegen der Sandflußrichtung den Sand im Behälter durchströmt und im oberen Teil des Behälters in die Abluftleitung (5) eintritt, über die Abluft in das Sandrohr gelangt, und einer in den Abluftleitungsweg eingeschalteten pneumatischen Abluftdrosselvorrichtung zur Einstellung des Verhältnisses von Abluftstrom und Dosierluftstrom.

Eine Dosiereinrichtung der vorstehenden Art ist durch die DE-A-2 656 646 bekanntgeworden.

Die bekannte Dosiereinrichtung basiert auf dem Grundgedanken, mit einem Teilluftstrom (Abluftstrom) des den Sandvorratsbehälter zugeleiteten Zuluftstromes den Sand im Behälter zu trocknen und aufzulockern, damit der Sand kontrolliert in das Sandrohr ausgetragen werden kann. Der Sandaustrag wird von dem anderen Teilluftstrom (Dosierluftstrom) besorgt.

Um aus dem Sandvorratsbehälter eine bestimmte Sandmenge pro Zeiteinheit auf die Fahrbahn zu bringen, besteht die pneumatische Steuervorrichtung in der Abluftleitung aus einer Drossel mit einem einstellbaren Drosselquerschnitt.

Je nach der Einstellung des Drosselquerschnittes in der Abluftleitung kann die Fördermenge des Sandes in das Sandrohr hinein über einen relativ weiten Bereich eingestellt werden, wobei maximale Fördermengen bei einem Abschluß der Abluftleitung erreicht werden.

Nach der bekannten Dosiereinrichtung besteht die pneumatische Steuervorrichtung aus einem Verstärkerventil (Seite 8, Zeile 18 der DE-A-2 656 646). Über das Verstärkerventil kann ein Luftstrom mit einem bestimmten Druck in den Behälter abgegeben werden. Hierbei kann es sich zum Beispiel um eine Luftmenge von 1,5 l/sec, bei einem Druck von 0,5 bar handeln (Seite 8, Zeilen 18—22).

Der Öffnungsquerschnitt der einstellbaren Drossel in der Abluftleitung läßt sich soweit einstellen, daß kein Sand in das Sandrohr ausgetragen wird. Die dem Behälter zugeleiteten und über die Abluftleitung abgeleitete Luft dient dann nur zur Trocknung und Auflockerung des Sandes. Der Anteil der zugeführten Luft, der dabei unmittelbar über die Glocke in das Sandrohr gelangt, reicht nicht aus, um Sand in das Sandrohr auszutragen. Wird der Öffnungsquerschnitt der einstellbaren Drossel von seiner weitesten Stellung aus verengt, dann wird mit zunehmender Verengung des Drosselquerschnittes die über das Sandrohr ausgetragene Sandmenge pro Zeiteinheit größer. Nach der bekannten Einrichtung kann das Verstärkerventil in der Versorgungsluftleitung auch umschaltbar ausgebildet sein, und zwar von einem niedrigen Druck der Versorgungsluftleitung, bei dem der Sand im Behälter nur getrocknet wird, auf einen höheren Druck, bei dem ein Sandaustrag über das Sandrohr möglich ist.

Es hat sich nun herausgestellt, daß die in der DE-A-2 656 646 offenbarte Steuerung zur Luftmengensteuerung der beiden Teilluftströme bzw. zur wahlweisen Einstellung des Dosierluftstromes zum dosierten Austragen mit dem anderen Teilluftstrom getrockneten und aufgelockerten Sand in das Sandrohr noch nicht voll befriedigte und darüber hinaus nicht betriebssicher genug arbeitete.

So konnten bei der bekannten Dosiereinrichtung nach beim Füllen des Sandvorratsbehälters mit Sand schon geringe Fehlsandanteile in die Abluftleitung gelangen und die Drossel verstopfen; oder es konnten in der Abluftleitung Sandbrücken gebildet werden und Ablagerungen entstehen, die den Abluftstrom in unkontrollierter Weise drosselten, wodurch der Dosierluftstromanteil und mit ihm die über das Sandrohr ausgetragene Sandmenge unkontrolliert zunahm.

Außerdem hat sich gezeigt, daß zum Sandstreuen auf Fahrbahnen unterschiedliche Sandqualitäten verwendet werden. Hiermit ist gemeint, daß die Streuqualität z. B. eines Quarzsandes bei gleichem Trocknungsgrad und etwa gleicher Korngrößenverteilung als Ergebnis eines Siebvorganges mit genormten Sieben erheblich von seiner Fließfähigkeit bestimmt ist, dabei ist die Fließfähigkeit zum Beispiel eines Quarzsandes bei gleichem Trocknungsgrad wesentlich von der Oberflächenbeschaffenheit der einzelnen Quarzkörner abhängig.

So besitzen Sande, die mit Zerkleinerungsmaschinen hergestellt wurden, gegenüber natürlichen Sanden eine merklich geringere Fließfähigkeit.

Die bekannte Dosiereinrichtung besaß noch keine einfache Einstellmöglichkeit, um beim Einsatz verschiedener Sandqualitäten etwa gleiche konstante Sandaustragsverhältnisse zu erhalten. So wurden bei gleichen Zuluft- und Abluftbedingungen mit natürlichen Quarzsanden erheblich größere Mengen pro Zeiteinheit ausgetragen, als mit gebrochenen Quarzsanden. Mit anderen Worten, es fehlte der bekannten Einrichtung eine einfache Möglichkeit zur schnellen und sicheren Anpaßbarkeit an unterschiedliche Sandqualitäten.

Bei der bekannten Einrichtung bestand weiterhin der Nachteil, daß die vor einem Fahrzeugrad endenden Sandrohre an ihren Austragsenden verschmutzen konnten, und daß durch eine solche Verschmutzung der Sandaustrag behindert werden konnte. Der bekannten Dosiereinrichtung ist keine klare und einfache Lehre zu entnehmen, in welcher Weise die Luftsteuerung vorzunehmen ist, damit durch eine mögliche Verstopfung des Sandrohraustrittes das die gewünschte Sandaustrittsmenge bestimmende Verhältnis von Dosierluftstrom und Abluftstrom nicht wesentlich beeinflußt wird.

Allein die Anweisung in der DE-A-2 656 646, die Abluftdrosselvorrichtung in der Abluftleitung steuerbar zu machen, d. h., den Drosselquerschnitt einer Drossel verstellbar auszubilden hat sich nicht bewährt, um das oben angesprochene Problem schnell und einfach lösen zu können.

Aufgabe der Erfindung ist es, eine Dosiereinrichtung der eingangs genannten Art derart auszubilden und dadurch die in den Sandvorratsbehälter einzuleitende Luftströmung derart steuern und aufteilen zu können, daß einerseits der Sand im Sandvorratsbehälter ausreichend getrocknet wird bzw. trocken gehalten wird, um einen dosierten Sandaustrag sicherstellen zu können und andererseits eine bestimmte Sandmenge pro Zeiteinheit während einer wählbaren Zeitspanne in das Sandrohr austragen zu können. Dabei soll auch die Möglichkeit bestehen, daß mittels der in den Sandvorratsbehälter zugeleiteten Luftströmung zeitweise nur getrocknet und zeitweise getrocknet und gesandet werden kann, wobei die auszutragende Sandmenge in Stufen oder stufenlos eingestellt werden kann. Außerdem soll die Dosiereinrichtung auch für verschiedene Sandqualitäten gleich gut geeignet sein, und Fehlsande sollen in der Abluftleitung zu keiner Beeinträchtigung der Dosiereinrichtung führen, und mögliche Verschmutzungen am Austragsende des Sandrohres sollen sich auf die eingestellten Sandaustragsmengen nicht wesentlich auswirken.

Die vorstehende Aufgabe wird zum einen erfindungsgemäß dadurch gelöst, daß die Abluftdrosseleinrichtung wenigstens aus einer fest eingestellten Drossel besteht, die in den Abluftleitungsweg derart eingesetzt ist, daß in die Abluftleitung fehleingetragener Sand aus dem Behälter ohne eine Verstopfung der Drossel und ohne den Abluftstrom behindernde Sandbrückenbildung in das Sandrohr gelangt und daß der Zuluftstrom über eine fest eingestellte Düse in der Versorgungsluftleitung eingestellt ist, wobei

a) zur Einstellung konstanter Sandaustragsverhältnisse bei einer gewählten Sandqualität und einem festgelegten Zuluftstrom

die Drossel zum Einsatz unterschiedlicher Sandqualitäten leicht auswechselbar angeordnet ist, und

b) zur Steuerung des Sandaustrages mit über die Zeit veränderbaren Sandaustragsmengen

b.1) die Düse von wenigstens einem eine zusätzlich fest eingestellte Düse beinhaltenden Zuluftdüsenweg überbrückbar ist, der über ein Magnetventil einschaltbar ist und/oder

b.2) die Drossel von wenigstens einem ein Abluftdrosselventil beinhaltenden Abluftdrosselweg überbrückbar ist, wobei das Abluftdrosselventil vom Versorgungsluftdruck gesteuert ist.

Die vorstehende Aufgabe wird außerdem erfindungsgemäß auch dadurch gelöst, daß die Abluftdrosseleinrichtung wenigstens aus einer fest eingestellten Drossel besteht, die derart im Abluftleitungsweg angeordnet ist, daß in die Abluftleitung fehl eingetragener Sand aus dem Behälter ohne eine Verstopfung der Drossel und ohne den Abluftstrom behindernde Sandbrückenbildung in das Sandrohr gelangt, wobei

a) zur Einstellung konstanter Sandaustragsverhältnisse bei einer gewählten Sandqualität und bei einem festgelegten Zuluftstrom

die Drossel zum Einsatz unterschiedlicher Sandqualitäten leicht auswechselbar angeordnet ist und der Zuluftstrom über wenigstens einen steuerbaren Lüfter eingestellt ist,

b) zur Steuerung des Sandaustrages mit über die Zeit veränderbaren Sandaustragsmengen der von dem oder den Lüftern gelieferte Zuluftstrom steuerbar ist.

Vorteilhafte Ausführungen und Weiterbildungen der Erfindung ergeben sich aus den Merkmalen der Unteransprüche.

Die Erfindung wird anhand von Ausführungsbeispielen näher beschrieben und erläutert, die in einer Zeichnung schematisch dargestellt sind. Hierin zeigt:

Fig. 1 eine Dosiereinrichtung nach der Erfindung in einer prinzipiellen Darstellung,

Fig. 2 eine erfindungsgemäße Ausführung mit je einer Düse in der Versorgungsluftleitung und einer Drossel in der Abluftleitung,

Fig. 3 eine erfindungsgemäße Ausführung mit einem zusätzlichen Membranventil in der Abluftleitung,

Fig. 4 eine erfindungsgemäße Ausführung entsprechend Fig. 3 mit zwei Magnetventilen,

Fig. 5 eine erfindungsgemäße Ausführung mit einer Abluftdrossel und zwei parallel geschalteten Membranventilen in der Abluftleitung sowie drei Magnetventilen,

Fig. 6 bis 8 die Ausführung nach Fig. 5 in verschiedenen Stellungen der Ventile,

Fig. 9 ein Membranventil für eine erfindungsgemäße Dosiereinrichtung,

Fig. 10 eine erfindungsgemäße Ausführung mit zwei Lüftern in der Zuluftleitung.

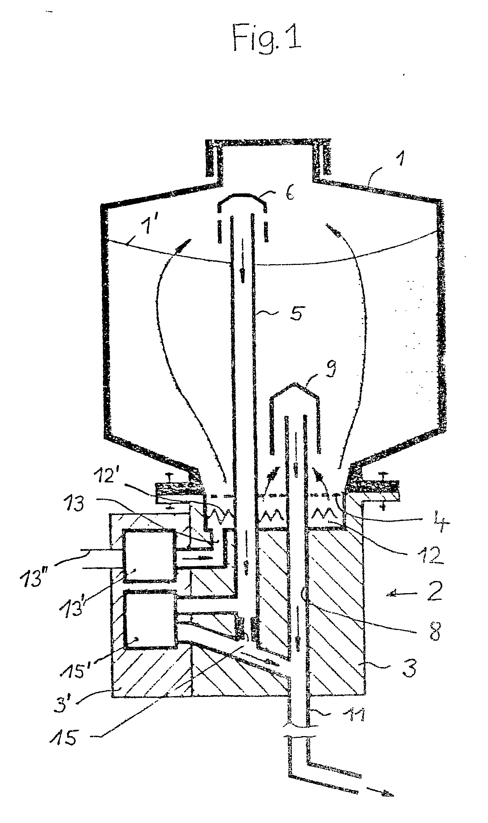

In Fig. 1 ist ein Sandvorratsbehälter mit 1 bezeichnet, der am unteren Ende offen ist und an den eine Dosiervorrichtung 2 zur Sanddosierung von unten anflanschbar ist. Die Sanddosiervorrichtung 2 bildet zusammen mit dem Sandvorratsbehälter 1 eine erfindungsgemäße Sanddosiereinrichtung.

Bei dem Sandvorratsbehälter 1 kann es sich auch um einen herkömmlichen Behälter handeln, der mit der Dosiervorrichtung 2 leicht kombiniert werden kann. Der Sandvorratsbehälter 1 ist an seinem oberen Ende mit einem Deckel im wesentlichen luftdicht verschließbar. Die Dosiervorrichtung 2 besteht aus einem Dosiergehäuse 3 mit verschiedenen Hohlräumen, auf die nachstehend noch näher eingegangen wird. An das Dosiergehäuse 3 ist ein Steuerteil 3' anflanschbar. Das offene untere Ende des Sandvorratsbehälters 1 ist durch eine perforierte, luftdurchlässige Platte, z. B. eine Sintermetallplatte 4, abgeschlossen. Das untere Ende des Rohres 5 ist innerhalb des Dosiergehäuses 3 über eine Drossel 15 an das andere Rohr 8 angeschlossen, dessen oberes Ende unter eine Glocke 9 im Sandvorratsbehälter 1 nahe seinem unteren Ende ragt. Das untere Ende des Rohres 8 ist an ein Sandaustragsrohr 11 angeschlossen. Die Drossel 15 ist vor einer an das Rohr 5 anschließenden Rohr- oder Kanalabzweigung 5' in dem Dosiergehäuse 3 überbrückt. Im oberen an den Sandvorratsbehälter 1 anschließenden Teil des Dosiergehäuseteiles 3 befindet sich eine Gehäuseausnehmung 12, in der eine elektrisch betriebene Heizung 12' untergebracht ist. An die Gehäuseausnehmung schließt eine Zuluftleitung 13' an, die über eine Zuluftdosiereinrichtung 13'' an eine mit einer nicht dargestellten Druckluftquelle in Verbindung stehenden Versorgungsleitung 13 angeschlossen ist. Die nach oben offene Gehäuseausnehmung schließt an das untere Ende des Sandvorratsbehälters 1 dicht an. Durch die Gehäuseausnehmung 12 sind die beiden Rohre 5 und 8 druckdicht hindurchgeführt. Während das Rohr 8 zum Austragen des Sandes dient, wird über das Rohr 5 die Luft abgeführt, die zur Trocknung und Auflockerung des Sandes durch den Behälter bis in sein oberes Ende aufwärts geströmt ist und dort nur über die Glocke 6 in das Rohr 5 entweichen kann, da der Behälter nach außen dicht abgeschlossen ist. In die die Drossel 15 überbrückende Kanalabzweigung 5' des Abflußrohres 5 ist eine Abluftdosiereinrichtung 15' eingeschaltet, die wie die Zuluftdosiereinrichtung 13'' im Steuerteil 3' untergebracht ist.

Durch Steuerung der dem Behälter 1 über die Zuluftleitung 13' zugeführten Zuluft mittels der Zuluftdosiereinrichtung 13'' und/oder durch Steuerung der am oberen Ende des Behälters 1 über die Glocke 6 in das Abluftrohr 5 abströmenden Abluft mittels der Abluftdosiereinrichtung 15' einschließlich der fest eingestellten Drossel 15 ist ein restlicher Teilluftstrom im Behälter 1 einstellbar, der als Dosierluftstrom über die Glocke 9 im Behälter und das Rohr 8 in das Sandaustragsrohr 11 abströmt. Dieser Dosierluftstrom ist so gewählt, daß er eine bestimmte Sandmenge pro Zeiteinheit in das Sandaustragsrohr mitreißt.

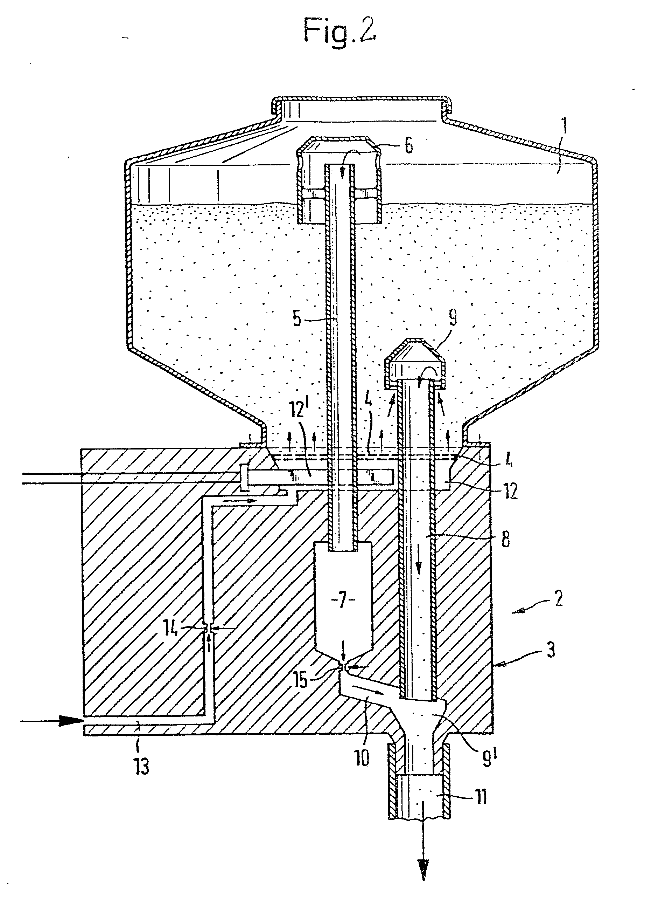

Sollte Fehlsand in das Rohr 5 g gelangen, so beeinträchtigt dieser nicht die Abluftsteuerung durch die Abluftdosiereinrichtung 15' und die Drossel 15. Hierzu ist die Drossel 15 im Querschnitt derart gewählt und zum Rohr 5 derart angeordnet, daß Fehlsand, der in das Rohr 5 eingetreten ist, durch die Drossel 15 hindurchfällt und über die Rohrabzweigung in das Rohr 8 bzw. in das Sandaustragsrohr 11 abfließen kann, ohne den Abluftstrom behindernde Sandbrücken bilden zu können. Die Abluftdosiereinrichtung 15' ist in die Rohrabzweigung derart eingeschaltet, daß sie von Fehlsanden unbeeinträchtigt bleibt. Die Zuluftdosiereinrichtung 13'' kann im einfachsten Falle eine Düse sein, wie das Ausführungsbeispiel nach Fig. 2 zeigt. Es kann sich aber auch um eine über Magnetventile oder Lüfter steuerbare Einrichtung handeln, wie sie in weiteren Ausführungsbeispielen aufgezeigt ist.

Die Abluftdosiereinrichtung 15' kann im einfachsten Falle entfallen, so daß dann die Abluft nur durch die Drossel 15 fest eingestellt ist. Hierzu befindet sich die Drossel 15 in vorteilhafter Weise an einer Stelle des Dosiergehäuses 3, die leicht zugänglich ist, so daß die Drossel 15 leicht ausgewechselt oder nachgestellt werden kann.

In den nachfolgenden Figuren für Ausführungen nach der Erfindung sind entsprechende Teile mit den gleichen Bezugszeichen versehen. In Fig. 2 reicht das untere Ende des Rohres 5 bis in eine Kammer 7 im Dosiergehäuse 3. Das obere Ende des Rohres 8 endet unter der Glocke 9 im Sandvorratsbehälter 1. Das untere Ende des Rohres reicht bis in eine weitere Kammer 9' im Dosiergehäuse 3. Die Kammer 9' liegt schräg unterhalb der Kammer 7 und ist über einen Kanal 10 mit der Kammer 7 verbunden. Die Kammer 9' schließt außerdem an das Sandaustragsrohr 11 an, das bis nah vor ein Fahrzeugrad dicht oberhalb der Schiene geführt ist. Das bis unter die Glocke 9 im Sandvorratsbehälter geführte Rohr 8 bildet zusammen mit dem Sandaustragsrohr 11 das nachstehend als Sandrohr bezeichnete Rohr zum Austragen des Sandes.

Unterhalb der Sinterplatte 4 befindet sich die Gehäuseausnehmung 12, an die die Versorgungsluftleitung 13 anschließt, die mit einer nicht dargestellten Druckluftquelle in Verbindung steht. In der Leitung 13 befindet sich eine Düse 14. In die Gehäuseausnehmung 12 ragt eine Heizpatrone 12', die zusammen mit der Gehäuseausnehmung eine Heizkammer bildet, die dicht an das untere Ende des Sandvorratsbehälters 1 angeschlossen ist. Die Abluftkammer 7 schließt über eine Abluftdrossel 15 an den Abluftkanal 10 an. Die Rohre 5 und 8 sind dicht durch die Gehäuseausnehmung 12 geführt. Die zum Beispiel über ein nicht dargestelltes Druckminderventil auf einen vorbestimmten Druck reduzierte Versorgungsluft tritt beim Sanden über die Leitung 13 mit der eingeschalteten Düse 14 und die Sinterplatte 4 in den Sandvorratsbehälter 1 ein. Dort bilden sich zwei Luftströme, und zwar der Dosierluftstrom und der Abluftstrom. Der Dosierluftstrom strömt als ein Teil der zugeführten Versorgungsluft über die Sandglocke 9 auf dem kürzest möglichen Weg in das Sandrohr 8, 11 und fördert dabei unter bestimmten Voraussetzungen Sand durch das Rohr 8, 11 vor das Fahrzeugrad. Der Abluftstrom als ein weiterer Teilluftstrom der in den Behälter 1 zugeführten Versorgungsluft durchströmt den Sand im Sandvorratsbehälter 1 und gelangt über die Glocke 6 am oberen Ende des Behälters 1 und das Abluftrohr 8 in die Kammer 7, um von hier über die Abluftdrossel 15 und den Abluftkanal 10 in der Kammer 9' wieder mit dem Dosierluftstrom vereinigt zu werden. Der Abluftstrom trocknet den Sand und unterstützt seine Fließfähigkeit. Hierdurch wird ein zuverlässiger Sandtransport über die Sandglocke 9 in das Sandrohr 8, 10 erzielt. Der Dosierluftstrom und der Abluftstrom lassen sich feinfühlig über die Düse 14 und die Drossel 15 einstellen, so daß bei einem vorbestimmten Druck der Versorgungsluftleitung ein konstanter Sandstrom erzielt wird.

Liegt der Druck des Zuluftstromes unterhalb eines vorbestimmten Niveaus, dann reicht die über die Glocke 9 im Sandvorratsbehälter in das Sandrohr 8, 11 abströmende Luft nicht aus, Sand in das Sandrohr zu fördern. In einem solchen Falle dient der zugeleitete Zuluftstrom lediglich zum Trocknen oder Auflockern des Sandes als Vorbereitung einer Sandung. Liegt der Druck des Versorgungsluftstromes oberhalb des vorbestimmten Druckniveaus und wird der Druck des Versorgungsluftstromes oberhalb des Druckniveaus geändert, so ändert sich in entsprechender Weise auch der Sandaustrag.

Dient als Druckluftquelle zum Beispiel ein steuerbarer Lüfter, zum Beispiel ein Lamellenlüfter, dann ist ein stufenlos veränderlicher Sandaustrag in Abhängigkeit von der eingestellten Förderleistung des Lüfters möglich, sofern der Druck der in die Leitung 13 geführten Versorgungsluft oberhalb des vorbestimmten Druckniveaus liegt, bei dem nur ein Auflockern oder Trocknen des Sandes erreicht wird. Statt eines steuerbaren Lüfters sind an die Versorgungsluftleitung auch wahlweise verschiedene Druckminderventile anschließbar, die je nach dem ausgewählten Druckminderventil Versorgungsluft mit einem bestimmten Druck an die Versorgungsluftleitung 13 abgeben, so daß auf diese Weise auch ein stufenweise veränderlicher Sandaustrag möglich ist.

Die Düse 14 in der Versorgungsluftleitung dient vor allem zur Anpassung an die Ausgangsdrücke der jeweils vorhandenen Druckluftquellen. Mit der Abluftdrossel 15 läßt sich eine feine Abluftdrosselung einstellen. Je stärker die Abluft gedrosselt wird, um so stärker steigt der Dosierluftstrom an und um so mehr Sand wird über das Sandrohr 8, 11 ausgetragen.

Ist der Sand in dem Sandvorratsbehälter 1 feucht, dann kann die Heizpatrone 12' an Strom angeschlossen werden, die den Raum 12 unterhalb der Sinterplatte 3 und diese selbst erwärmt, wodurch erwärmte Versorgungsluft in den Behälter strömt, um den Trocknungsvorgang noch zu beschleunigen. Dabei lassen sich die Verhältnisse so wählen, daß bei einer Versorgungsluft von 30 Litern/min ca. 50% der Luft den Behälter durchströmen und als Abluft über das Abluftrohr 5 abströmen, während die anderen 50% über die Sandglocke 9 direkt in das Sandrohr 8, 11 gelangen, ohne daß dabei ein Sanden eintritt. Das heißt, ohne Sanden kann mit einem relativ hohen Luftanteil der Sand im Behälter 1 getrocknet werden.

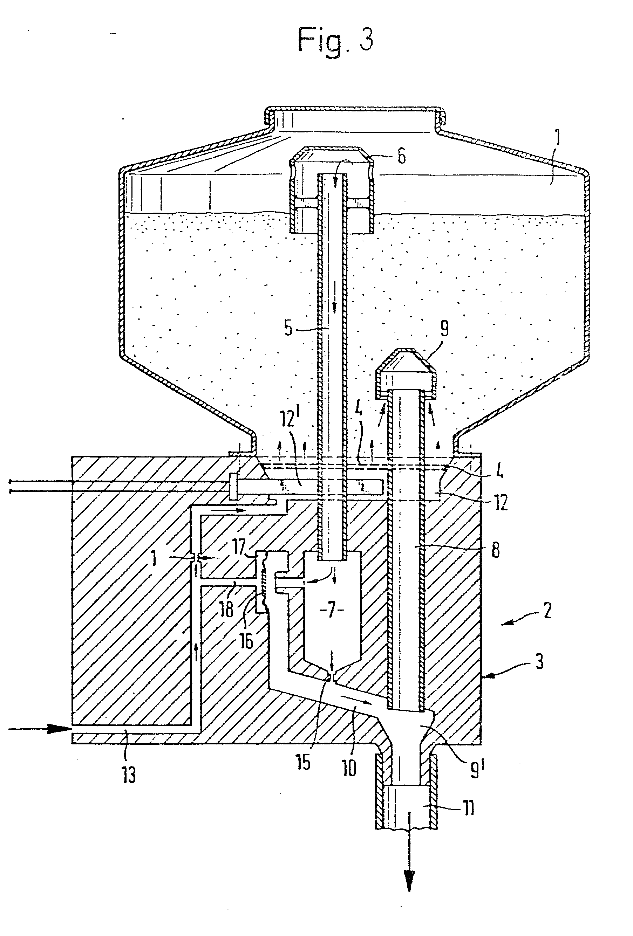

Fig. 3 zeigt eine weitere Dosiereinrichtung nach der Erfindung, die sich von der Dosiereinrichtung nach Fig. 2 vor allem dadurch unterscheidet, daß parallel zur Abluftdrossel 15 ein Membranventil 16 geschaltet ist. Bei geöffnetem Membranventil 16 mit einem vorgewählten Ventilquerschnitt ist das Abluftrohr über die Abluftdrossel 15 und außerdem über den offenen Ventilsitz des Membranventils 16 an den Abluftkanal 10 angeschlossen. Die von der Membran abgeschlossene Steuerkammer 17 des Membranventils 16 ist über eine Zweigleitung 18 an den Versorgungsluftkanal 13 angeschlossen. Die Düse 14 ist der Anschlußstelle der Zweigleitung 18 an dem Versorgungsluftkanal 13 nachgeschaltet.

Wird die Versorgungsluftleitung 13 an eine Druckluftquelle angeschlossen, so kann zum Trocknen des Sandes Luft mit einem Druck, beispielsweise bis ca. 2 bar, in den Sandvorratsbehälter gedrückt werden, ohne daß dabei eine Sandung erfolgt. Die Verhältnisse können so gewählt sein, daß erst beim Überschreiten eines Druckniveaus von 2 bar das Membranventil 16 geschlossen wird, so daß dadurch nur noch ein wesentlich geringerer Abluftstrom über das Abluftrohr und die Abluftdrossel 15 zum Sandrohr abfließen kann, während ein entsprechend größerer Dosierluftstrom über die Sandglocke 9 direkt in das Sandrohr gelangt, wobei Sand mit ausgetragen wird. In einem Versuchsfalle wurden bei 2,2 bar 330 g/min Sand ausgetragen. Die Düse 14 kann entfallen, wenn die Drücke am Eingang der Versorgungsluftleitung 13 ausreichend niedrig eingestellt sind. Die Düse 14 in der Versorgungsluftleitung 13 dient zur Dosierung des an den Behälter 1 abzugebenden Luftstromes und außerdem dazu, in der Steuerkammer 17 einen Staudruck aufzubauen, der bei einer vorgewählten Größe zum Schalten des Membranventils 16 führt. Wurde im Beispielsfalle der Druck der Versorgungsluft von 2,2 bar auf ca. 3 bar erhöht, so wurde ein Sandaustrag von ca. 800 g/min erhalten, und bei einem Druck von ca. 4 bar wurde ein Sandaustrag von ca. 1300 g/min erhalten.

Wird also zum Beispiel über Druckreduzierventile die Versorgungsluftleitung 13 mit 1,5 bar beaufschlagt, dann erfolgt nur Trocknung und keine Sandung. Erst bei einem Druck von ca. 2,2 bar wurde im Beispielsfalle das Membranventil 16 geschlossen und ca. 330 g/min Sand ausgetragen. Schließlich wurden bei einem Druck von 3 bar ca. 800 g/min und bei einem Druck von 4 bar ca. 1300 g/min Sand ausgetragen. Wird ein Lüfter, vorzugsweise ein Lamellenlüfter an die Versorgungsluftleitung angeschlossen, so kann die Versorgungsluftmenge in Abhängigkeit von der Drehzahl des Lüfters gewählt werden.

Liegen verschiedene Druckminderventile zum Beispiel für 1,5 bar, 2,2 bar, 3 bar und 4 bar vor, so können die Verhältnisse derart gewählt werden, daß ein reines Trocknen bei 1,5 bar, ein Sanden bei einer ersten Dosierstufe von 2,2 bar und bei einer zweiten und dritten Dosierstufe von 3 und 4 bar erzielt wird. Das Zuschalten eines oder mehrerer Druckminderventile an den Versorgungsluftkanal kann jeweils über ein Magnetventil erfolgen. Die Druckminderventile und die Magnetventile können sich zweckmäßigerweise im Steuerraum des Fahrzeuges befinden.

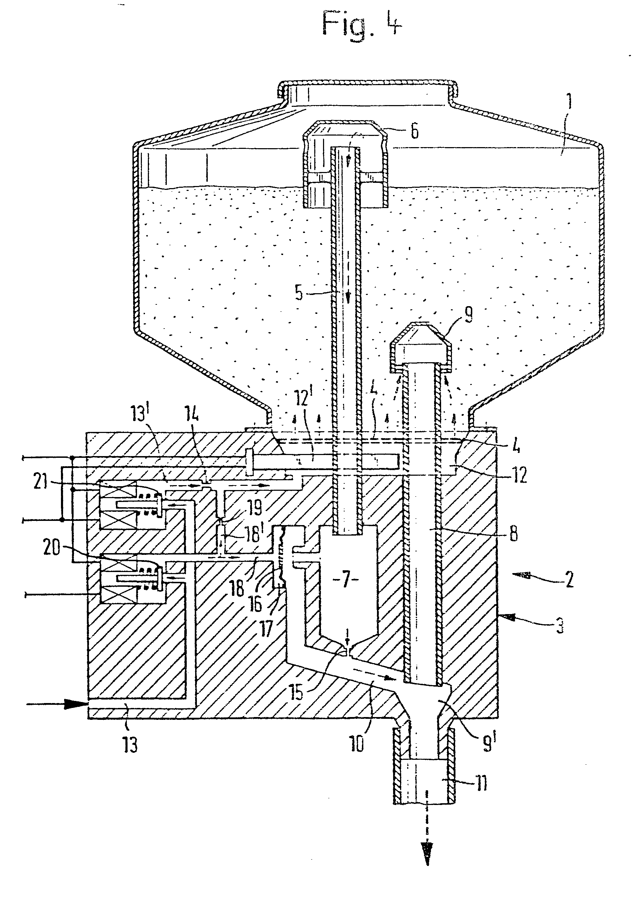

Fig. 4 zeigt eine weitere Lösung für eine erfindungsgemäße Dosiereinrichtung, bei der im Unterschied zur Ausführung nach Fig. 2 im Dosiergehäuse 3 zwei Magnetventile vorhanden sind. Über das eine Magnetventil 20 ist das Membranventil 16 an die Versorgungsluftleitung 13 anschließbar, und über das Magnetventil 21 ist die Versorgungsluftleitung 13 bei geschlossenem Magnetventil 20 nur an die Heizkammer 12, 12' anschließbar. Bei geöffnetem Magnetventil 21 ist die Versorgungsluftleitung 13 über eine Anschlußleitung 13' an die Heizkammer 12, 12' angeschlossen. In der Anschlußleitung 13' befindet sich die Düse 14. Außerdem ist die Zweigleitung 18 zum Membranventil 16 über eine weitere Leitung 18' und eine in die Leitung 18' eingeschaltete Düse 19 an die Heizkammer 12, 12' angeschlossen.

Im Normalfalle steht ein im wesentlich konstanter Versorgungsluftdruck in der Versorgungsluftleitung 13 ständig an den in Ruhestellung geschlossenen Magnetventilen 20, 21 an. Soll der Sand im Vorratsbehälter 1 getrocknet werden, ohne daß ein Sanden erfolgt, wird das Magnetventil 21 erregt und parallel hierzu die Heizpatrone 12' eingeschaltet. Das Magnetventil 20 bleibt während des Trocknungsvorganges geschlossen. Die Luft gelangt über die Leitung 13' und die Düse 14 in die Heizkammer 12, 12' und wird dort erwärmt. Das Membranventil 16 bleibt geöffnet, da der Schließdruck für die Membran, bedingt durch die Abstimmung der Düsen 14 und 19, nicht erreicht wird. Über das offene Membranventil 16 und die Abluftdrossel 15 entsteht somit im Vorratsbehälter ein relativ großer, weitgehend ungedrosselter Abluftstrom, der den Sand trocknet, während der Dosierluftstrom, der den Behälter über die Glocke 9 im Vorratsbehälter 1 und das Sandrohr 8 verläßt, zum Sanden nicht ausreicht.

Soll gesandet werden, so wird zusätzlich das Magnetventil 20 erregt. Die zugeführte Luft gelangt nun auch über die Leitungen 18 und 18' und die Düse 19 in den Vorratsbehälter 1. Durch den Staudruck vor der Düse 19 wird nunmehr das Membranventil 16 in seine Schließstellung gedrückt und der damit nur noch über die Abluftdrossel 15 mögliche, relativ kleine Abluftstrom bewirkt einen wesentlich stärkeren Dosierluftstrom über die Glocke 9 und das Sandrohr 8, 11, wobei dadurch ein bestimmter Sandstrom von der Luft mitgerissen wird. Mit der Dosiereinrichtung nach Fig. 4 kann also mittels zweier Magnetventile eine Trocknung und eine anschließende Sandung erreicht werden, wenn die Versorgungsluftleitung 13 an einen im wesentlichen konstanten Versorgungsluftdruck angeschlossen ist. Eine Sandung wird dabei solange ausgesetzt, wie das Membranventil nicht geschaltet ist.

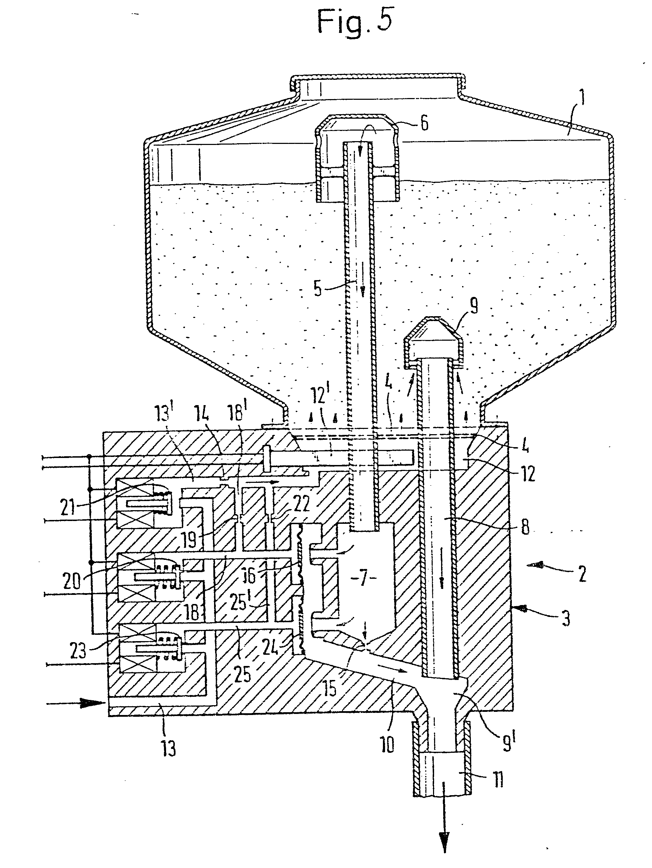

Die Ausführung nach Fig. 5 unterscheidet sich von der Ausführung nach Fig. 4 vor allem dadurch, daß zusätzlich zu dem Membranventil 16 in Fig. 3 ein weiteres Membranventil 24 und zusätzlich zu den Magnetventilen 20 und 21 in Fig. 4 ein weiteres Magnetventil 23 vorgesehen ist. Das Membranventil 16 ist wie in Fig. 4 über die Leitung 18 und das Magnetventil 20 an die Versorgungsluftleitung 13 und über die Leitung 18' mit der Düse 19 an die Heizkammer 12, 12' angeschlossen. Außerdem ist die Heizkammer 12, 12', wie in Fig. 4 bei geschlossenem Magnetventil 20 und offenem Magnetventil 21 über die Leitung 13' und die Düse 14 an die Versorgungsluftleitung 13 angeschlossen. Das zusätzliche Membranventil 24 ist über einen Kanal 25 und das dritte Magnetventil 23 an die Versorgungsluftleitung 13 und über eine Leitung 25' und der eingeschlossenen Düse 22 an die Heizkammer 12, 12' angeschlossen.

Die Sanddosiereinrichtung nach Fig. 5 entspricht in der Funktion im wesentlichen der Einrichtung nach Fig. 4. Durch das zusätzliche Magnetventil 23, das Membranventil 24 und die zusätzliche Düse 22 im Kanal 25' kann die Dosierluft bzw. die Abluft durch wahlweise bzw. gemeinsame Erregung der Magnetventile 20, 21, 23 so gesteuert werden, daß maximal drei Sanddosierstufen erzielt werden. Eine Einbeziehung des Magnetventils 21 in die Dosiersteuerung ermöglicht sogar sechs Dosierstufen, so daß damit die Sandfördermenge allen denkbaren Erfordernissen angepaßt werden kann.

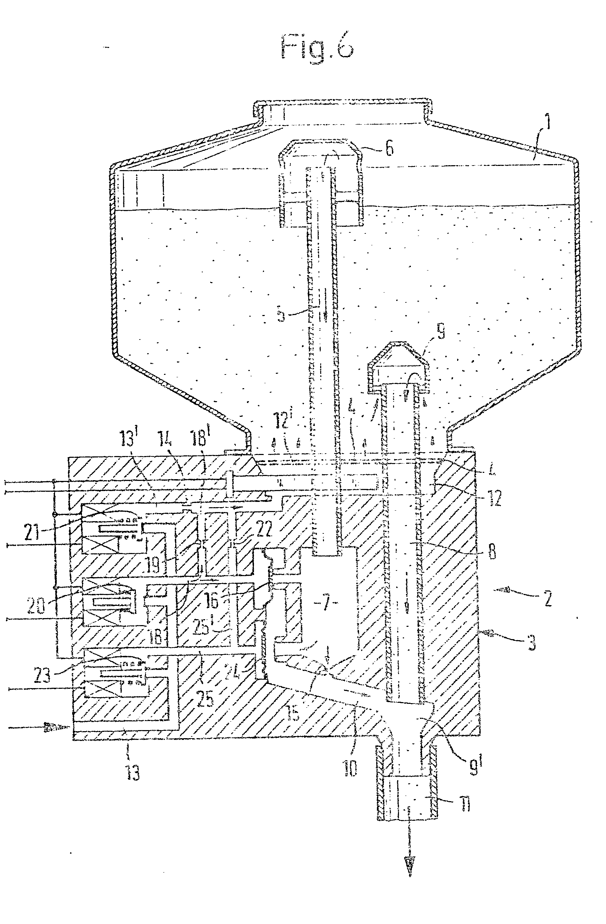

Für eine dreistufige Dosiersteuerung können die Düsen 14, 19 und 22 und die Öffnungsquerschnitte der Membranventile 16 und 24 derart ausgelegt sein, daß bei einer Luftversorgung an der Versorgungsluftleitung 13 mit konstantem Druck bei geschlossenen Magnetventilen 20 und 23 und offenem Magnetventil 21 beide Membranventile offen sind (Fig. 5). Über das offene Magnetventil 21 und die Düse 14 wird nur ein Trocknungsluftstrom über die Heizkammer 12, 12' erwärmt an den Behälter 1 abgegeben. Etwa 50% des in den Behälter einströmenden Trocknungsluftstromes fließt als Abluftstrom über das Abluftrohr 5 und die beiden offenen Membranventile 16 und 24 sowie die Abluftdrossel 15 in das Sandrohr und bewirkt eine Trocknung und Auflockerung des Sandes im Vorratsbehälter 1, während die restlichen Anteile des zugeführten Versorgungsluftstromes über die Glocke 9 und das Sandrohr 8, 8' abströmen, ohne daß eine Sandförderung erfolgt. Bei einer ersten Dosierstufe mit einer ersten Sandfördermenge von beispielsweise 300 g/30 sec sind die Magnetventile 21 und 23 geschlossen, und nur das Magnetventil 20 ist geöffnet (Fig. 6). Die Düsen 19 und 22 sind so gewählt, daß bei dieser Bedingung das Membranventil 16 geschlossen wird, während das Membranventil 24 geöffnet bleibt. Die Abluft kann damit gedrosselt nur noch über das offene Membranventil 24 und die Abluftdrossel 15 in das Sandrohr 8, 11 abströmen. Der über das Abluftrohr 5 fließende Abluftstrom wird damit verringert und entsprechend der über die Sandglocke in das Sandrohr fließende Dosierluftstrom wird entsprechend vergrößert, wodurch in einem Beispielsfalle ein konstanter Sandstrom von 300 g/30 sec aus dem Sandrohr 8 ausgetragen werden.

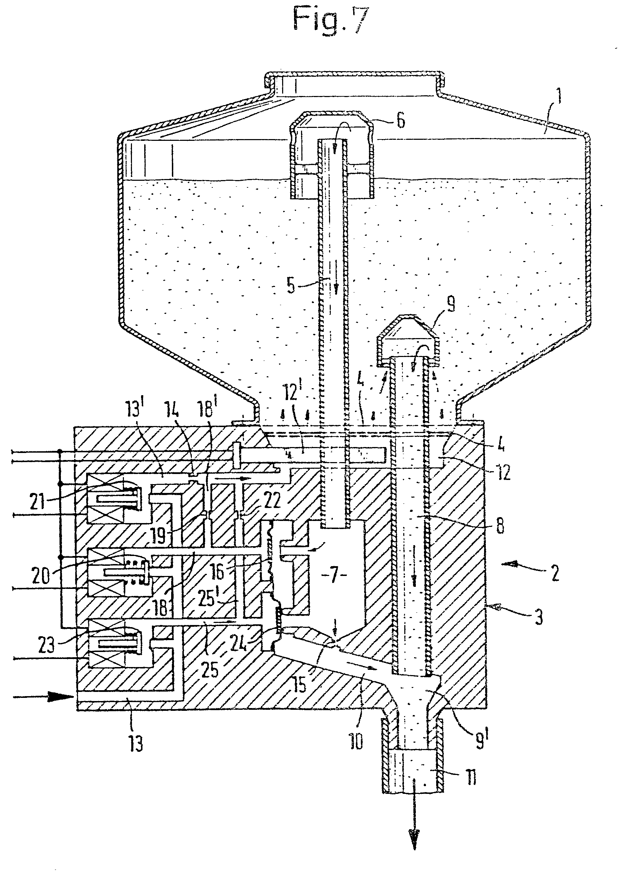

Zur Einstellung einer zweiten Dosierstufe mit einer erhöhten Sandfördermenge, im Beispielsfalle von 1500 g/30 sec sind die Magnetventile 21 und 23 geöffnet und das Magnetventil 20 geschlossen (Fig. 7). Bei dieser Bedingung ist das Membranventil 24 geschlossen und das Membranventil 16 geöffnet. Aufgrund des engeren Öffnungsquerschnittes des Membranventils 16 gegenüber dem Membranventil 24 wird in dieser Schaltstellung der Abluftstrom weiter gedrosselt und der Dosierluftstrom entsprechend weiter erhöht, wodurch ein höherer, kontinuierlicher Sandaustrag von beispielsweise 1500 g/30 sec erzielt wird.

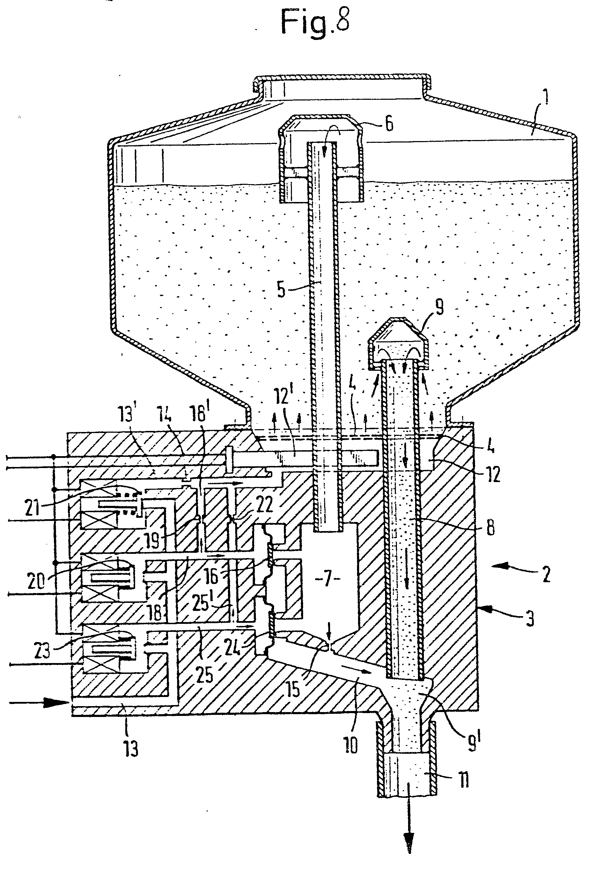

Wird in einer dritten Dosierstufe lediglich das Magnetventil 21 geschlossen und beide anderen Magnetventile 20 und 23 geöffnet, dann sind bei dieser Schaltstellung beide Membranventile 16 und 24 geschlossen (Fig. 8), und der Abluftstrom, der nur noch über die Abluftdrossel 15 in das Sandrohr 8, 11 abströmen kann, ist noch weiter gedrosselt, während der Dosierluftstrom, der über die Glocke 9 in das Sandrohr 8, 11 gelangt, weiter erhöht ist, wodurch ein kontinuierlicher Sandaustrag von zum Beispiel 2700 g/30 sec erreicht werden kann.

Es ist klar, daß in entsprechender Weise die vorbeschriebenen Dosiereinrichtungen auf sechs Dosierstufen erweitert werden können, wenn außer den vorstehend beschriebenen Magnetventilschaltungen drei weitere Magnetventilschaltungen (Öffnen aller drei Magnetventile 20, 21 und 23, Öffnen nur des Magnetventils 23 und Öffnen der Magnetventile 20 und 21 und Schließen des Magnetventils 23) hinzugenommen werden.

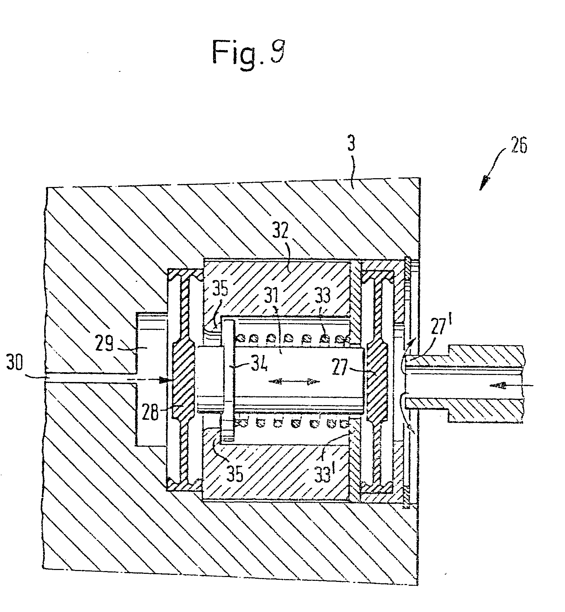

Fig. 9 zeigt eine Membranventilvorrichtung 26, die sich bei einer Dosiereinrichtung nach der Erfindung mit Vorteil verwenden läßt. Die Vorrichtung 26 umfaßt zwei Membranen 27 und 28, von denen die erste Membran 27 dem Ventilsitz 27' gegenüberliegt und die zweite Membran 28 die Steuerkammer 29 abschließt, die über einen Zweigkanal 30 und gegebenenfalls über ein Magnetventil an den Versorgungsluftkanal 13 (Fig. 3 bis 8) angeschlossen sind. Zwischen den beiden Membranen 27 und 28 ist ein Stößel 31 in einem Ventilgehäuse 32 verschieblich geführt, der in Richtung der zweiten Membran 28 mit einer Feder 33 belastet ist, die sich einerseits an einem Gehäusering 33' und andererseits an einem flanschartigen Vorsprung 34 am einen Ende des Stößels 32 abstützt. Der Stößel 32 greift mit seinem einen Ende durch den Gehäusering 33, wobei das eine Ende der ersten Membran 27 gegenüberliegt. Das andere Ende des Stößels greift durch eine Öffnung im Ventilgehäuse und liegt der zweiten Membran 28 gegenüber. Der federbelastete Stößel wird bei unbelasteter zweiter Membran 28 mit seinem flanschartigen Vorsprung 34 von einer Gehäuseschulter 35 abgefangen.

Das Doppelmembranventil 26 nach Fig. 9 besitzt den Vorteil, daß es von einem Druck in der Steuerkammer entgegen einer bestimmten Federkraft in seine Schließstellung bewegt wird, wobei die Feder zwischen den beiden Membranen in einem sandfreien Raum liegt, während im Bereich des Ventilsitzes 27' Sandspuren auftreten können, die als unbedeutende Vielsandaustragung über das Abluftrohr 5 (Fig. 3 bis 8) in die Abluftkammer 7 gelangen können.

Ein solches Doppelmembranventil läßt sich ohne weiteres zu einem Drosselventil ausbilden, das druckabhängig einen bestimmten Öffnungsspalt freigibt. Hierfür bieten sich dem Fachmann eine Vielzahl von bekannten Lösungen an, die hier im einzelnen nicht näher beschrieben zu werden brauchen. Es kann zum Beispiel eine Nadel oder dgl. an der Membran 27 in einem besonders ausgebildeten Ventilsitz um so tiefer eingreifen und damit einen um so kleineren Öffnungsspalt freigeben, je höher der Druck in der Steuerkammer 29 ist. Auf diese Weise könnte die Abluft mit zunehmendem Druck in dem Versorgungskanal 13 (Fig. 2 bis 8) in steigendem Maße gedrosselt werden, was bedeutet, daß die Dosierluft und damit die Sandaustragsmenge pro Zeiteinheit kontinuierlich zunimmt.

Dem Fachmann ist klar, daß die Zu- und/oder Abluftdosiereinrichtungen, wie sie in den verschiedenen Ausführungsbeispielen nach den Fig. 2 bis 8 verwendet werden in Steuerteilen entsprechend dem Steuerteil 3' nach Fig. 1 zusammengefaßt sein können, die an das Dosiergehäuse 3 anflanschbar sind. Die Steuerteile lassen sich dann leicht auswechseln. Weiterhin ist klar, daß die Zuluftdosiereinrichtungen auch getrennt von der Dosiereinrichtung, zum Beispiel auf einem zentralen Führerstand angeordnet sein können. Nimmt das Steuerteil 3' entsprechend den Fig. 3 bis 8 ein oder mehrere Membranventile auf, so befinden sich die Membranen in vorteilhafter Weise an der Anschlußstirnseite des Steuerteiles, während die zugehörigen Ventilsitze sich in der gehäuseseitigen Anschlußstirnseite befinden.

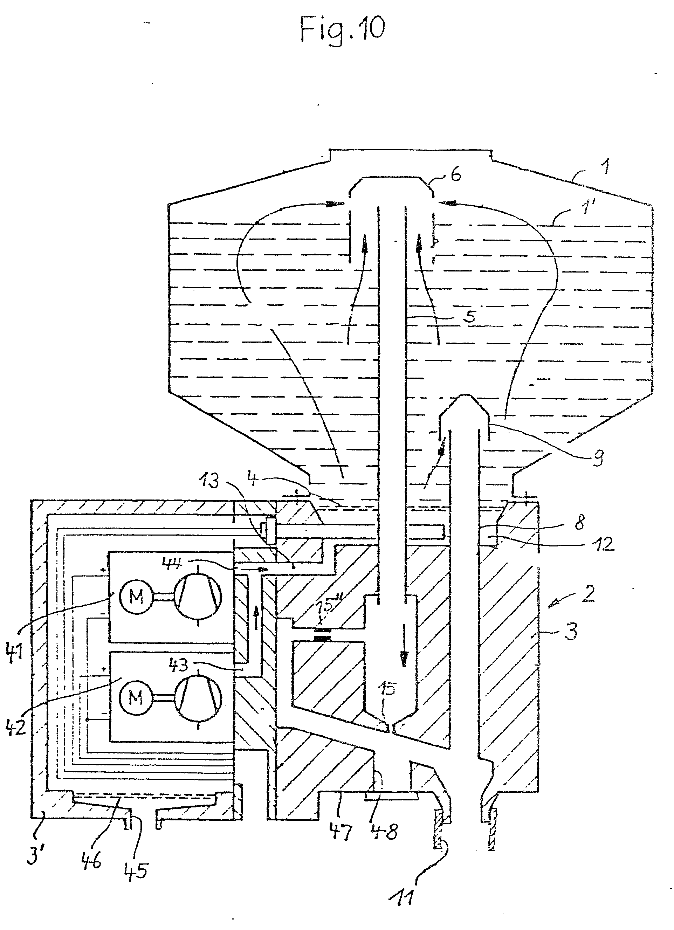

Fig. 10 zeigt noch eine Ausführung, in der in die Zuluftleitung zwei Lüfter 41, 42 eingeschaltet sind, die sich in einem Steuerteil 3' befinden, das an das Dosiergehäuse 3 anflanschbar ist. Die Ausgänge 43, 44 der Lüfter 41, 32 liegen parallel an dem Eingang der Zuluftleitung 13'. Der Boden des Steuerteils 3' weist eine Öffnung 45 auf, über die die beiden Lüfter 41 und 42 die Luft über ein Filter 46 ansaugen.

Mittels einer nicht dargestellten elektrischen Umschaltvorrichtung können die beiden Lüfter entweder elektrisch parallel oder in Reihe geschaltet werden. Hierdurch ist auf eine sehr einfache Weise eine Steuerung der Lüfter in zwei Stufen möglich.

Statt einer steuerbaren Abluftdosiereinrichtung 15', wie sie in den Fig. 3 bis 9 gezeigt ist, ist in dem die Abluftdrossel 15 umgehenden Kanal eine weitere Abluftdrossel 15'' angeordnet. Durch Abstimmung dieser beiden Drosseln 15 und 15'' ist die Abluftdrosselung auf einen bestimmten Wert einstellbar. Dabei ist die Drossel 15 vom Boden 47 des Dosiergehäuses 3 über eine verschließbare Öffnung 48 und die Drossel 15'' bei abgenommenem Steuerteil 3' von der linken Seite des Dosiergehäuses zur Einstellung bequem zu erreichen. Die an die Versorgungsluftleitung angeschlossene Druckluftquelle kann auch ein Druckluftbehälter sein, der von einem fahrzeugseitigen Kompressor gefüllt wird.

Zwischen dem Druckluftbehälter und dem Eingang der Versorgungsluftleitung kann wenigstens ein Druckminderventil mit einem nachgeschalteten Magnetventil vorgesehen sein. Dabei können mehrere parallel geschaltete Druckminderventile vorgesehen sein, von denen jedes Druckminderventil auf einen bestimmten, sich von den Ausgangsdrücken der anderen Druckminderventile unterscheidenden Ausgangsdruck eingestellt ist. Je nach der Schaltstellung der den Druckminderventilen zugeordneten Magnetventilen kann die Versorgungsluftleitung an den Ausgang eines oder mehrerer Druckminderventile angeschlossen sein.

## Patentansprüche

1. Dosiereinrichtung für eine Sandungsanlage eines Fahrzeuges, insbesondere Schienenfahrzeuges, mit einem nach außen weitgehend dicht durch den Boden des Behälters (1) bis unter eine Glocke (9) im Behälter ragenden und unmittelbar vor wenigstens einem Fahrzeugrad endenden Sandrohr (8, 11), einer an den luftdurchlässig ausgebildeten Boden (4) des Behälters angeschlossenen und in Verbindung mit einer Druckluftquelle stehenden Versorgungsluftleitung (13) und einer an das Sandrohr mit Abstand von der Glocke angeschlossenen Abluftleitung (5), deren offenes Ende (6) in vom Sand im wesentlichen freigehaltenen oberen Teil des Behälters liegt, einer in die Versorgungsluftleitung (13) eingeschalteten pneumatischen Steuervorrichtung zur Überwachung der an den Behälter abgegebenen Luft, die sich im Behälter in zwei Teilströme aufteilt, von denen der eine Teilstrom (Dosierluftstrom) zum dosierten Austragen von Sand auf dem kürzesten Wege über die Glocke (9) in das Sandrohr (8, 11) eintritt und der andere Teilstrom (Abluftstrom) zum Trocknen bzw. Auflockern des Sandes entgegen der Sandflußrichtung den Sand im Behälter durchströmt und im oberen Teil des Behälters in die Abluftleitung (5) eintritt, über die Abluft in das Sandrohr gelangt, und einer in den Abluftleitungsweg eingeschalteten pneumatischen Abluftdrosselvorrichtung zur Einstellung des Verhältnisses von Abluftstrom und Dosierluftstrom, dadurch gekennzeichnet,

daß die Abluftdrosseleinrichtung wenigstens aus einer fest eingestellten Drossel (15) besteht, die in den Abluftleitungsweg (5, 7, 10) derart eingesetzt ist, daß in die Abluftleitung (5) fehleingetragener Sand aus dem Behälter (1) ohne eine Verstopfung der Drossel (15) und ohne den Abluftstrom behindernde Sandbrückenbildung in das Sandrohr (11) gelangt, und

daß der Zuluftstrom über eine fest eingestellte Düse (14) in der Versorgungsluftleitung (13) eingestellt ist, wobei

a) zur Einstellung konstanter Sandaustragsverhältnisse bei einer gewählten Sandqualität und einem festgelegten Zuluftstrom

die Drossel (15) zum Einsatz unterschiedlicher Sandqualitäten leicht auswechselbar angeordnet ist, und

b) zur Steuerung des Sandaustrages mit über die Zeit veränderbaren Sandaustragsmengen

b.1) die Düse (14) von wenigstens einem eine zusätzliche fest eingestellte Düse (19) beinhaltenden Zuluftdüsenweg (18, 18'; 25, 25') überbrückbar ist, der über ein Magnetventil (20, 23) einschaltbar ist und/oder

b.2) die Drossel (15) von wenigstens einem ein Abluftdrosselventil (16, 22, 26) beinhaltenden Abluftdrosselweg überbrückbar ist, wobei das Abluftdrosselventil vom Versorgungsluftdruck (Kammer 17) gesteuert ist.

2. Dosiereinrichtung für eine Sandungsanlage eines Fahrzeuges, insbesondere Schienenfahrzeuges, mit einem nach außen weitgehend dicht durch den Boden des Behälters (1) bis unter eine Glocke (9) im Behälter ragenden und unmittelbar vor wenigstens einem Fahrzeugrad endenden Sandrohr (8, 11), einer an den luftdurchlässig ausgebildeten Boden (4) des Behälters angeschlossenen und in Verbindung mit einer Druckluftquelle stehenden Versorgungsluftleitung (13) und einer an das Sandrohr mit Abstand von der Glocke angeschlossenen Abluftleitung (5), deren offenes Ende (6) in vom Sand im wesentlichen freigehaltenen oberen Teil des Behälters liegt, einer in die Versorgungsluftleitung (13) eingeschalteten pneumatischen Steuervorrichtung zur Überwachung der an den Behälter abgegebenen Luft, die sich im Behälter in zwei Teilströme aufteilt, von denen der eine Teilstrom (Dosierluftstrom) zum dosierten Austragen von Sand auf dem kürzesten Wege über die Glocke (9) in das Sandrohr (8, 11) eintritt und der andere Teilstrom (Abluftstrom) zum Trocknen bzw. Auflockern des Sandes entgegen der Sandflußrichtung den Sand im Behälter durchströmt und im oberen Teil des Behälters in die Abluftleitung (5) eintritt, über die Abluft in das Sandrohr gelangt, und einer in den Abluftleitungsweg eingeschalteten pneumatischen Abluftdrosselvorrichtung zur Einstellung des Verhältnisses von Abluftstrom und Dosierluftstrom, dadurch gekennzeichnet, daß die Abluftdrosseleinrichtung wenigstens aus einer fest eingestellten Drossel (15) besteht, die derart im Abluftleitungsweg angeordnet ist, daß in die Abluftleitung (5) fehl eingetragener Sand aus dem Behälter (1) ohne eine Verstopfung der Drossel (15) und ohne den Abluftstrom behindernde Sandbrückenbildung in das Sandrohr gelangt, wobei

a) zur Einstellung konstanter Sandaustragsverhältnisse bei einer gewählten Sandqualität und bei einem festgelegten Zuluftstrom die Drossel (15) zum Einsatz unterschiedlicher Sandqualität leicht auswechselbar angeordnet ist und der Zuluftstrom über wenigstens einen steuerbaren Lüfter (41, 42) eingestellt ist;

b) zur Steuerung des Sandaustrages mit über die Zeit veränderbaren Sandaustragsmengen der von dem oder den Lüftern (41, 42) gelieferte Zuluftstrom steuerbar ist.

3. Dosiereinrichtung nach Anspruch 1, dadurch gekennzeichnet, daß die Abluftdrosselventile (16, 22, 26) Membranventile sind.

4. Dosiereinrichtung nach Anspruch 3, dadurch gekennzeichnet, daß die Steuerkammer eines Membranventils in einen Zuluftdüsenweg (18, 18'; 25, 25') zwischen Magnetventil (20, 23) und zusätzlicher Zuluftdüse (19; 22) eingeschaltet ist.

5. Dosiereinrichtung nach Anspruch 1, dadurch gekennzeichnet, daß der Düse (14) in der Versorgungsluftleitung (13) in . Strömungsrichtung der Luft ein Magnetventil (21) vorgeschaltet ist.

6. Dosiereinrichtung nach Anspruch 1, dadurch gekennzeichnet, daß die Druckluftquelle ein Druckluftbehälter ist, der von einem fahrzeugseitigen Kompressor gespeist ist, und daß zwischen dem Druckluftbehälter und dem Eingang der Versorgungsluftleitung (13) wenigstens ein Druckminderventil mit je einem nachgeschalteten Magnetventil geschaltet ist.

7. Dosiereinrichtung nach Anspruch 6, dadurch gekennzeichnet, daß bei mehreren, parallelgeschalteten Druckminderventilen jedes Druckminderventil auf einen bestimmten, sich von den Ausgangsdrücken der anderen Druckminderventile unterscheidenden Ausgangsdruck eingestellt ist.

8. Dosiereinrichtung nach Anspruch 2, dadurch gekennzeichnet, daß der oder die Lüfter (41, 42) Lamellen- oder Membranlüfter sind.

9. Dosiereinrichtung nach Anspruch 2 oder 8, dadurch gekennzeichnet, daß zur Steuerung des Zuluftstromes mindestens zwei Lüfter (41, 42) vorhanden sind, deren elektrische Antriebsmotoren über eine elektrische Umschaltvorrichtung parallel oder in Reihe zueinander schaltbar sind.

10. Dosiereinrichtung nach Anspruch 1 oder 2, dadurch gekennzeichnet, daß die Abluftleitung (5) durch den Behälter geführt ist und in einer Kammer (7) unterhalb des Behälters endet, die einerseits über wenigstens eine als Ventilsitz ausgebildete Öffnung eines Abluftdrosselventils (16, 24) und andererseits über die als Bypass ausgebildete Drossel (15) an das Sandrohr (18, 11) angeschlossen ist.

11. Dosiereinrichtung nach Anspruch 10, dadurch gekennzeichnet, daß die Drossel (15) am tiefsten Punkt der Kammer (7) liegt, daß das Ende der Abluftleitung (5) etwa senkrecht über der Drossel (15) liegt und daß die Ventilöffnung des Abluftdrosselventils (16, 24) mit etwa waagrechter Achse an die Kammer (7) oberhalb der Drossel (15) anschließt.

## Claims

1. Dosing device for a sanding installation of a vehicle, in particular a rail vehicle, with a sand pipe (8, 11) projecting extensively outwards tightly through the bottom of the container (1) and underneath a bell-shaped top (9) in the container, and ending directly in front of at least one vehicle wheel, an air supply line (13) connected to the air-permeable bottom (4) of the container and connected to a compressed air source, and en exhaust air duct (5) connected to the sand pipe at a distance from the bell-shaped top, the open end (6) of which duct lies in the upper part of the container that is substantially free from sand, a pneumatic control device connected into the air supply line (13) for monitoring the air given-off to the container, which air is divided in the container into two partial streams, one partial stream of which (dosing air stream) enters the sand pipe (8, 11) for the dosed discharge of sand by the shortest route over the bell-shaped top (9) and the other partial stream (exhaust air stream) flows through the sand in the container, in the opposite direction to the flow of sand, to dry or aerate the sand, and enters the exhaust air duct (5) in the upper part of the container, via which duct the exhaust air reaches the sand pipe, and a pneumatic exhaust air throttle device connected into the exhaust air duct path for adjusting the ratio of exhaust air stream to dosing air stream, characterised in
that the exhaust air throttle device consists of at least one fixedly set throttle (15), which is inserted into the exhaust air duct path (5, 7, 10) in such a way that sand from the container (1) wrongly fed into the exhaust air duct (5) reaches the sand pipe (11) without blocking the throttle (15) and without sand bridge formation preventing the exhaust air stream, and
that the air supply stream is adjusted by means of a fixedly set nozzle (14) in the air supply duct (13) whereby

a) for the adjustment of constant sand delivery ratios with a selected sand quality and a predetermined air supply stream the throttle (15) is arranged to be easily exchanged for using different qualities of sand, and
b) to control the sand delivery with sand discharge amounts that can be altered over time

b.1) the nozzle (14) can be bridged by at least one air supply nozzle path (18, 18'; 25, 25') containing an additional fixedly set nozzle (19), which path can be connected by a solenoid valve (20, 23) and/or
b.2) the throttle (15) can be bridged by at least one exhaust air throttle path containing an exhaust air throttle valve (16, 22, 26), whereby the exhaust air throttle valve is controlled by the air supply pressure (chamber 17).

2. Dosing device for a sanding installation of a vehicle, in particular a rail vehicle, with a sand pipe (8, 11) projecting extensively outwards tightly through the bottom of the container (1) and underneath a bell-shaped top (9) in the container, and ending directly in front of at least one vehicle wheel, an air supply line (13) connected to the air-permeable bottom (4) of the container and connected to a compressed air source, and an exhaust air duct (5) connected to the sand pipe at a distance from the bell-shaped top, the open end (6) of which duct lies in the upper part of the container that is substantially free from sand, a pneumatic control device connected into the air supply line (13) for monitoring the air given-off to the container, which air is divided in the container into two partial streams, one partial stream of which (dosing air stream) enters the sand pipe (8, 11) for the dosed discharge of sand by the shortest route over the bell-shaped top (9) and the other partial stream (exhaust air stream) flows through the sand in the container, in the opposite direction to the flow of sand, to dry or aerate the sand, and enters the exhaust air duct (5) in the upper part of the container, via which duct the exhaust air reaches the sand pipe, and a pneumatic exhaust air throttle device connected into the exhaust air duct path for adjusting the ratio of exhaust air stream to dosing air stream, characterised in that
the exhaust air throttle device consists of at least one fixedly set throttle (15) which is arranged in the exhaust air duct path in such a way that sand from the container (1) wrongly fed into the exhaust air duct (5) reaches the sand pipe without blocking the throttle (15) and without sand bridge formation preventing the exhaust air stream,

a) for the adjustment of constant sand delivery ratios with a selected sand quality and a predetermined air supply stream
the throttle (15) is arranged to be easily exchanges for using different qualities of sand and
the air supply stream is adjusted by at least one controllable vent (41, 42);
b) to control the sand delivery with sand discharge amounts that can be altered over time, the air supply stream delivered by the one or more than one vent (41, 42) can be controlled.

3. Dosing device according to claim 1, characterised in that the exhaust air throttle valves (16, 22, 26) are diaphragm valves.
4. Dosing device according to claim 3, characterised in that the control chamber of a diaphragm valve is connected into an air supply nozzle path (18, 18', 25, 25') between the solenoid valve (20, 23) and additional air supply nozzle (19, 22).
5. Dosing device according to claim 1, characterised in that a solenoid valve (21) is connected in front of the nozzle (14) in the air supply duct (13) in the direction of air flow.
6. Dosing device according to claim 1, characterised in that the compressed air source is a compressed air container which is fed from a compressor on the vehicle side, and that between the compressed air container and the input of the air supply line (13) there is connected at least one pressure reducing valve with respectively a subsequently connected solenoid valve.
7. Dosing device according to claim 6, characterised in that with several pressure reducing valves connected in parallel, each pressure reducing valve is set to a specific output pressure different from the output pressures of the other pressure reducing valves.

8. Dosing device according to claim 2, characterised in that the one or more than one vent (41, 42) is/are lamellae- or diaphragm vents.

9. Dosing device according to claim 2 or 8, characterised in that to control the air supply stream at least two vents (41, 42) are present, whose electrical drive motors can be connected in parallel or in series to one another via an electrical switch-over device.

10. Dosing device according to claim 1 or 2, characterised in that the exhaust air duct (5) is guided through the container and ends in a chamber (7) below the container, which on the one hand is connected to the sand pipe (18, 11) via at least one aperture of an exhaust air throttle valve (16, 24) formed as a valve seat, and on the other hand via the throttle (15) constructed as a by-pass.

11. Dosing device according to claim 10, characterised in that the throttle (15) lies at the deepest point in the chamber (7), in that the end of the exhaust air duct (5) lies more or less vertical over the throttle (15), and in that the valve aperture of the exhaust air throttle valve (16, 24) connects with an approximately horizontal axis to the chamber (7) above the throttle (15).

**Revendications**

1. Dispositif de dosage pour une installation de sablage d'un véhicule, plus particulièrement d'un véhicule sur rails comportant un tube de sablage (8, 11) s'étendant, avec une bonne étanchéité par rapport à l'extérieur, à travers le fond de réservoir (1), jusqu'à sous une cloche (9) dans le réservoir et se terminant directement au moins devant une roue de véhicule, une conduite d'air d'alimentation (13) qui est reliée au fond (4) du réservoir, réalisé de façon à être perméable à l'air et qui est en liaison avec une source d'air comprimé et avec une conduite d'évacuation de l'air (5) reliée au tube de sablage à une certaine distance de la cloche et dont l'extrémité ouverte (6) se situe dans la partie supérieure du réservoir qui est sensiblement à l'abri du sable, un dispositif de commande pneumatique monté dans ladite conduite d'air d'alimentation (13) pour contrôler l'air qui est fourni au réservoir et qui se divise dans le réservoir en deux courants partiels dont un courant partiel (courant d'air de dosage) passe, pour l'évacuation dosée du sable, par le chemin le plus court, par la cloche (9), dans le tube de sablage (8, 11) et dont l'autre courant partiel (courant d'air d'évacuation) passe, pour le séchage et l'ameublissement du sable, en sens inverse de la direction de l'écoulement du sable, à travers le sable contenu dans le réservoir et pénètre, dans la partie supérieure du réservoir, dans la conduite de l'air d'évacuation (5), par l'intermédiaire de l'évacuation de l'air, dans le tube de sablage, et un dispositif pneumatique d'étranglement de l'air d'évacuation, monté dans la voie du conduit d'air d'évacuation, pour le réglage du rapport entre corant d'air d'évacuation et courant d'air de dosage, caractérisé par le fait

— que le dispositif d'étranglement de l'air d'évacuation est constitué par au moins un étranglement (15) réglé de manière fixe et disposé de telle manière dans la voie d'écoulement de l'air d'évacuation (5, 7, 10) que du sable introduit par erreur à partir du réservoir (1) dans la conduite d'air d'évacuation (5) passe, sans boucher l'étranglement (15) et sans former un pont de sable gênant le courant d'air d'évacutation, dans le tube de sablage (11), et

— que le courant d'air d'amenée est réglé dans le conduit d'air d'alimentation (13) par l'intermédiaire d'une tuyère (14) réglée de façon fixe, alors que

a) pour régler des conditions constantes d'évacuation du sable, pour une quantité sélectionnée de sable et pour un courant déterminé d'air d'amenée, l'étranglement (15) est facilement remplaçable pour la mise en oeuvre de sables de différents qualités, et que

b) pour commander le débit de sable avec des valeurs variables avec le temps

b.1) la tuyère (14) est susceptible d'être pontée par au moins une voie de tuyères d'air d'amenée (18, 18'; 25, 25') contenant une tuyère supplémentaire (19) à réglage fixe et susceptible d'être branchée par l'intermédiaire d'une électrovanne (20, 23), et/ou

b.2) l'étranglement (15) est susceptible d'être ponté par au moins une voie d'étranglement de l'air d'évacuation contenant une soupape d'étranglement de l'air d'évacvuation (16, 22, 26), celle-ci étant commandée par la pression d'air d'alimentation (chambre 17).

2. Dispositif de dosage pour une installation de sablage d'un véhicule, plus particulièrement d'un véhicule sur rails comportant un tube de sablage (8, 11) s'étendant, avec une bonne étanchéité par rapport à l'extérieur, à travers le fond de réservoir (1), jusqu'à sous une cloche (9) dans le réservoir et se terminant directement au moins devant une roue du véhicule, une conduite d'air d'alimentation (13) qui est reliée au fond (4) du réservoir, réalisé de façon à être perméable à l'air et qui est en liaison avec une source d'air comprimé et avec une conduite d'évacuation de l'air (5) reliée au tube de sablage à une certaine distance de la cloche et dont l'extrémité ouverte (6) se situe dans la partie supérieure du réservoir qui est sensiblement à l'abri du sable, un dispositif de commande pneumatique monté dans ladite conduite d'air d'alimentation (13) pour contrôler l'air qui est fourni au réservoir et qui se divise dans le réservoir en deux courants partiels dont un courant partiel (courant d'air de dosage) passe, pour l'évacuation dosée du sable, par le chemin le plus court, par la cloche (9), dans le tube de sablage (8, 11) et dont l'autre courant partiel (courant d'air d'évacuation) passe, pour le séchage et l'ameublissement du sable, en sens inverse de la direction de l'écoulement du sable, à travers le sable contenu dans le réservoir et pénètre, dans la partie supérieure du réservoir, dans la conduite de l'air d'évacuation (5), par l'intermédiaire de l'évacuation de l'air, dans le tube de sablage, et un dispositif pneumatique d'étranglement de l'air d'évacuation, monté dans la voie du conduit d'air d'évacuation, pour le réglage du rapport entre courant d'air d'évacuation et courant d'air de dosage, caractérisé par le fait que le dispositif d'étranglement de l'évacuation de l'air est constitué par un étranglement (15) réglé de façon fixe, et qui est disposé de telle façon dans la voie de la conduite d'air d'évacuation que du sable introduit par erreur à partir du réservoir (1) dans la conduite d'air d'évacuation (5) passe sans boucher l'étranglement (15) et sans former un pont de sable gênant le courant d'air d'évacuation, dans le tube de sablage, la réalisation étant telle que

a) pour le réglage de conditions constantes d'évacuation du sable, pour une qualité de sable choisie et pour un courant d'air d'amenée déterminé, l'étranglement (15) est disposé, pour la mise en oeuvre de qualités de sables différents, de façon à pouvoir être facilement remplacé, et le courant d'air d'amenée est réglable par l'intermédiaire d'un ventilateur (41, 42) susceptible d'être commandé,

b) alors que pour la commande du débit de sable, variable avec le temps, le courant d'air d'amenée fourni par le ou les ventilateurs (41, 42), est susceptible d'être commandé.

3. Dispositif de dosage selon la revendication 1, caractérisé par le fait que les soupapes d'étranglement de l'air d'évacuation (16, 22, 26) sont des soupapes à membrane.

4. Dispositif de dosage selon la revendication 3, caractérisé par le fait que la chambre de commande d'une soupape à membrane est montée dans une voie de tuyère d'air d'amenée (18, 18', 25, 25'), entre l'électrovanne (20, 23) et des tuyères supplémentaires (19; 22) d'air d'amenée.

5. Dispositif de dosage selon la revendication 1, caractérisé par le fait qu'en amont de la tuyère (14) est prévue, dans la conduite d'air d'alimentation (13) et disposée dans le sens de l'écoulement de l'air, une électrovanne (21).

6. Dispositif de dosage selon la revendication 1, caractérisé par le fait que la source d'air comprimé est constituée par un réservoir à air comprimé qui est alimenté à partir d'un compresseur fixé au véhicule, et qu'entre le réservoir d'air comprimé et l'entrée de la conduite d'air d'alimentation (13) est prévue au moins une soupape de réduction de la pression à laquelle est reliée en aval une électrovanne.

7. Dispositif de dosage selon la revendication 6, caractérisé par le fait que dans le cas de plusieurs soupapes de réduction de pression qui sont montées en parallèle, chaque soupape de réduction de pression est réglée à une pression de sortie déterminée qui se distingue des pressions de sortie des autres soupapes de réduction de pression.

8. Dispositif de dosage selon la revendication 2, caractérisé par le fait que le ou les aérateurs (41, 42) sont des aérateurs à lamelles ou à membranes.

9. Dispositif de dosage selon la revendication 2 ou 8, caractérisé par le fait que pour la commande de l'air d'amenée, on prévoit au moins deux aérateurs (41, 42) dont les moteurs électriques d'entraînement sont susceptibles d'être commutés en parallèle ou en série par l'intermédiaire d'un dispositif de commutation électrique.

10. Dispositif de dosage selon la revendication 1 ou 2, caractérisé par le fait que la conduite d'air d'évacuation (5) passe par le réservoir et débouche dans une chambre (7) située sous le réservoir, laquelle chambre est reliée au tube de sablage (18, 11) d'une part, par l'intermédiaire d'au moins une ouverture d'une soupape d'étranglement de l'air d'évacuation (16, 24), réalisée sous la forme d'un siège de soupape et d'autre part par l'intermédiaire d'un étranglement (15) réalisé sous la forme d'un by-pass.

11. Dispositif de dosage selon la revendication 10, caractérisé par le fait que l'étranglement (15) est situé au point le plus bas de la chambre (7), que l'extrémité de la conduite d'air d'évacuation (5) se situe à peu près perpendiculairement au-dessus de l'étranglement (15) et que l'ouverture de soupape de la soupape d'étranglement de l'air d'évacuation (16, 24) se raccorde, à peu près avec un axe horizontal, à la chambre (7) au-dessus de l'étranglement (15).

# Fig. 1

# Fig.2

# Fig. 3

# Fig. 4

# Fig. 5

# Fig.6

# Fig.7

# Fig.8

# Fig. 9

# Fig.10